# EUROPEAN PATENT APPLICATION

(11) **EP 2 219 000 A2**
(43) Date of publication of application: **18.08.2010**
(21) Application number: 10461503.4
(22) Date of filing: 16.02.2010
(51) Int. Cl.: F28D 9/00, F24F 12/00

(54) **Section of recuperator for supply-exhaust ventilation system**

(30) Priority: 16.02.2009 PL 38728309
(71) Applicant: Jakóbczak, Antoni, 20-541 Lublin (PL)
(72) Inventor: Jakóbczak, Antoni, 20-541 Lublin (PL)
(74) Representative: Belz, Anna

(57) **Abstract**

The recuperator's section for the intake and exhaust ventilation centre. The section has an outlet opening and at least one inlet opening for fresh air (the openings are located on the same side of the vertical axis of the section) and an outlet opening and at least one inlet opening for exhaust air (the openings are located on the opposite side of the vertical axis of the section). The section has also the recuperator's plates positioned perpendicularly with regard to the longitudinal axis of the ventilation centre. The section is characterized by the following: It has at least one pair of segments (5) that are arranged parallely. The inlet-outlet openings of a pair of segments (5) are connected to the space of the lower collector (6) or the upper collector (7). The collectors (6 and 7) are frontally closed on one side. On the other side the collectors are connected through sleeves (12 and 13) with the openings in partitions (14 and 15) of section (1) while the spaces (19, 22), limited by external walls of section (1) and partition (20), form two collectors for the openings of segments (5) that are not housed by collectors (6) and (7). Additionally, each lower collector (6) is mounted on the frame with brackets (10) on which the lower, external edges of the external segments (5) are based.

## Description

The subject of the present invention is the recuperator's section for the intake and exhaust ventilation centre.

In the present technologies using the plate heat exchangers (so-called recuperators) for recuperation of heat from the air discharged to atmosphere by ventilation systems, the constructions of intake and exhaust ventilation centres are employed in which the recuperators' plates are vertical or horizontal but, at the same time, they are always parallel to the longitudinal axis of the ventilation centre. Such a manner of placing the recuperator in the ventilation centre (that has been used so far) is the cause of stagnation in development of counter-current recuperators.

Counter - current recuperators, such as, for example, GS-type recuperators, have been available on the market for about 10 years. The counter-current recuperators have considerably better characteristics than single as well as double cross-flow recuperators due to a more advantageous temperature field. The above has been demonstrated, among others, in the publication entitled: "Vorteile von Gegenstrom - im Vergleich zu verdoppelten Kreuzsromwarmetauschen" HLH Bd 58 (2007) No. 4, pages 89 - 94.

Due to common use of the recuperators' plates that are parallel to the longitudinal axis of the ventilation centre, the manufacturer of the above-mentioned GS recuperators (Klingenburg company located near Munich) has extended its offer by adding four more sizes of the recuperators (GS 62, 80, 95 and 110). Consequently, considerable costs connected with preparation of the instrumentation have been generated. Such costs are avoidable with the use of the design described in the presented invention. The extension of the assortment of recuperators is the evidence of regress in development of recuperators because consumption of sheet metal plate per a unit of heat transfer capacity is higher in larger GS-type recuperators (even by 60 % higher than in case of the smallest GS 25 recuperator). It is because the temperature field in the larger GS-type recuperators is more and more similar to the temperature field in the cross-flow recuperators.

Patent application P - 353 985 presents the system for sealing the heat recuperation chamber in the ventilation system.

Patent application P - 363 653 presents the system in which the inlet and outlet of each of the both air streams are located on the same side of the section's axis. However, the systems presented in the above-mentioned applications do not include the design that can make it possible to ensure that the inlet and outlet of a given air stream (for example, of a fresh air stream) to/from the section is located on the same side of the section's vertical axis. Currently, there are only such recuperators available on the market in which the fresh air stream intersects with the stream of exhaust air.

The United States Patent Application US2005236136 presents also the heat exchanger in which the plates of heat accumulating mass are perpendicular to the longitudinal axis of the ventilation centre. The two alternative heat accumulating packs have the inlet and outlet of each of the streams of fresh and exhaust air that are located on the opposite sides of the vertical axis of the heat exchanger. This solution has a complicated design in which the use of two four-way valves is required.

The characteristic feature of the recuperator's section according to the invention is that it has at least one pair of parallely arranged segments. The inlet-outlet openings of a pair of segments are connected to the space of the lower collector or the upper collector. The upper collector and the lower collector are frontally closed on one side. On the other side, the upper collector and the lower collector are connected through the sleeves to the openings in the partitions of the recuperator's section. The spaces limited by the section's external walls and the partition separating these walls form two collectors for segment openings that are not housed by the lower collector and the upper collector. Additionally, each lower collector is mounted on the frame with brackets on which the lower, external edges of the external segments are based.

It is beneficial when the recuperator's section includes the recuperator's segments in which the fresh air stream intersects with the stream of exhaust air and when the sleeve connecting the upper collector with the opening in the partition is located on the side of the section opposite to the side on which the sleeve connecting the lower collector with the opening in the section's partition is located.

It is beneficial when the recuperator's section includes the recuperator's segments in which the fresh air stream does not intersect with the stream of exhaust air and when the sleeve connecting the upper collector with the front partition of the section is located on the same side of the section with the sleeve connecting the lower collector with the opening in the section's partition.

The invention enables the use of commonly available recuperators in which the fresh air stream intersects with the stream of exhaust air.

The invention enables also the combination of small counter-current recuperators that are available on the market into a unit of recuperators for the needs of large ventilation centres. Such a unit of recuperators does not lose the advantages of the counter-current recuperator. Consequently, the invention enables easy and common use of the available counter-current recuperators. The unit formed by the recuperator's segments has a compact and modular construction that can be slid outside the section's housing and is easy to maintain thanks to the use of small recuperators' segments.

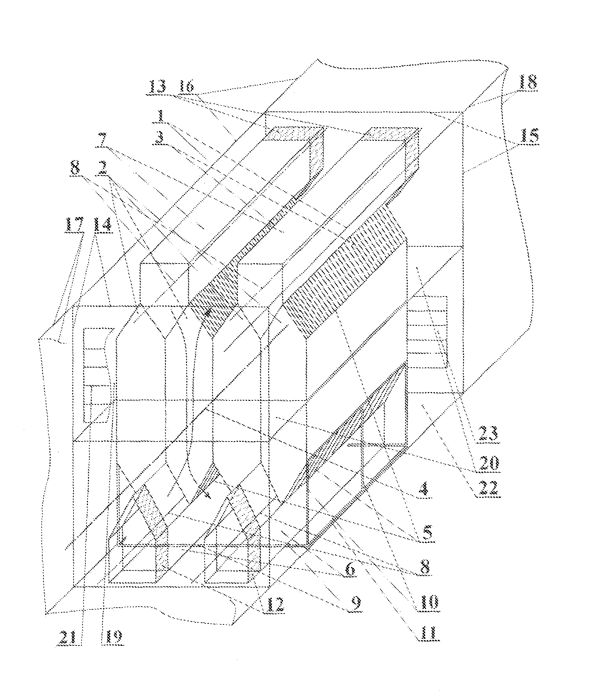

The example of the subject of the invention is presented on the drawing that shows the schematic presentation of the section's interior in axonometric view, with the contours of the external walls marked.

Section **1** of the intake and exhaust ventilation centre (16) has a plate heat exchanger (recuperator) **2** consisting of two pairs of segments **5** that are positioned side by side. The segments **5** have plates **3** that are positioned perpendicularly with regard to longitudinal axis **4** of the ventilation centre. The inlet - outlet openings, whose area is limited by the contact surface of segments **5** of a given pair and the vertex edge of these segments **5,** are connected with the internal space of the channel-type lower collector **6** or upper collector **7.** Lower collectors **6** are mounted on frame **9** that has vertical brackets **10** on which lower, external edges of external segments **5** are based. Thanks to such a solution, frame **9** and lower collectors **6** form base **11** on which recuperator **2** is supported. One end of collectors **6** and **7** is closed while the other end of the collectors is connected through flexible sleeves **12** and **13** with the openings in partitions **14** and **15** that separate section **1** of recuperator **2** from adjacent sections **17** and **18** of the ventilation centre **16.** Sleeves **12** of lower collectors **6** are connected with the openings located in partition **14,** while sleeves **13** of the upper collectors are connected with the openings in partition **15.** At half height of the section **1** there is partition **20** that separates upper space **19** from lower space **22.** Space **19** and space **22** are the collectors for the remaining outlet-inlet openings of recuperator 2 that are not shielded by collectors **6** and **7.** In partition **14** there is a damper **21** located on the side of upper space **19,** while in the partition **15,** damper **23** is located on the side of lower space **22.** The design of section **1** presented in the example results from the principle prevailing in the recuperators available on the market i.e. that the streams of air flowing through segments **5** intersect with each other, which is indicated on the drawing by the arrows.

One of the streams, for example, the fresh air stream, flows along the route on which the following elements are located: sleeves **12,** collectors **6,** gaps between the plates **3** of segments **5,** upper space **19** of section **1,** damper **21.** The other stream, for example, the stream of air discharged to atmosphere flows along the following route: sleeves **13,** collectors **7,** gaps between the plates **3,** lower space **22,** damper **23.**

In the alternative design of section **1,** in which the streams of air flowing through segments **5** do not intersect, sleeves **12** and **13** are connected to partition **14** or partition **15.**
Several other variants of air flowing routes can be established by: modification of air streams, change of air flow direction, modification of the partitions to the openings of which the sleeves **12** and **13** are connected, with simultaneous exchange of partitions, with various location of dampers **21** and **23.**

## Claims

1. The recuperator's section for the intake and exhaust ventilation centre, comprising: an outlet opening and at least one inlet opening for fresh air that are located on the same side of the vertical axis of the section, an outlet opening and at least one inlet opening for exhaust air that are located on the opposite side of the vertical axis of the section, and recuperator's plates positioned perpendicularly with regard to the longitudinal axis of the ventilation centre **characterized in that** it has at least one pair of segments (5) that are arranged parallely, wherein the inlet-outlet openings of the pair of segments (5) are connected to the space of the lower collector (6) or the upper collector (7), and the collectors (6 and 7) are frontally closed on one side and on the other side the collectors are connected through sleeves (12 and 13) with the openings in partitions (14 and 15) of section (1) while the space (19) and space (22), limited by external walls of section (1) and partition (20), form two collectors for the openings of segments (5) that are not housed by collectors (6) and (7), additionally, each lower collector (6) is mounted on the frame with brackets (10) on which the lower, external edges of the external segments (5) are based.

2. The recuperator's section according to patent claim 1 is **characterized in that** it contains segments (5) of recuperator 2, in which the fresh air stream intersects with the stream of exhaust air wherein the sleeve connecting upper collector (7) with the opening in partition (15) or (14) is located on the side of section (1) opposite to the side on which sleeve (13) is located that connects lower collector (6) with the opening in partition, respectively, (14) or (15).

3. The recuperator's section according to patent claim 1 is **characterized by** the fact that it contains segments (5) of recuperator 2, in which the fresh air stream does not intersect with the stream of exhaust air, wherein the sleeve connecting upper collector (7) with front partition (15) or (14) of the section is located on the same side of section with sleeve (12) that connects lower collector (6) with the opening in partition, respectively, (14) or (15).
